(19) Europäisches Patentamt
European Patent Office
Office européen des brevets

(11) **EP 2 237 007 A1**

(12) **EUROPEAN PATENT APPLICATION**
published in accordance with Art. 153(4) EPC

(43) Date of publication:
06.10.2010 Bulletin 2010/40

(51) Int Cl.:
*G01K 17/00* (2006.01)  *G01N 25/20* (2006.01)

(21) Application number: 08865478.5

(22) Date of filing: 23.12.2008

(86) International application number:
PCT/ES2008/070242

(87) International publication number:
WO 2009/080861 (02.07.2009 Gazette 2009/27)

(84) Designated Contracting States:
AT BE BG CH CY CZ DE DK EE ES FI FR GB GR HR HU IE IS IT LI LT LU LV MC MT NL NO PL PT RO SE SI SK TR
Designated Extension States:
AL BA MK RS

(30) Priority: 24.12.2007 ES 200703426

(71) Applicant: Universidad De Zaragoza
50009 Zaragoza (ES)

(72) Inventors:
• CASTRO CORELLA, Miguel
E-50009 Zaragoza (ES)
• MEDIANO HEREDIA, Arturo
E-50018 Zaragoza (ES)
• NATIVIDAD BLANCO, Eva
E-50009 Zaragoza (ES)
• PALACIO PARADA, Fernando
E-50009 Zaragoza (ES)

(74) Representative: Pons Ariño, Angel
Glorieta Ruben Dario 4
28010 Madrid (ES)

(54) **DEVICE AND ADIABATIC METHOD FOR MEASURING THE SPECIFIC ABSORPTION RATE OF A MATERIAL SUBJECTED TO AN ALTERNATING MAGNETIC FIELD**

(57) The invention relates to a device and a method for adiabatically measuring the increase in temperature experienced by materials with active heat-dissipation mechanisms upon being subjected to an alternating magnetic field. The specific absorption rate (SAR, W/g) is determined on the basis of the field application time and magnitude and the heat capacity and mass of the material. The device includes: a system of containers and a vacuum device which can be used to maintain the environment of the sample under vacuum conditions, a screen which minimises radiation and conduction losses between the sample and the environment thereof, temperature sensors and the measurement and control electronics thereof, a field element for generating the magnetic field and the necessary electronics for exciting said field element, and the software for obtaining measurements and controlling the entire system.

Fig. 2

EP 2 237 007 A1

**Description**

**Technical field of the invention**

The invention relates to an adiabatic device for measuring the specific absorption rate of a material subjected to an alternating magnetic field.

**Background of the invention**

A wide range of materials experience heat dissipation in the presence of an alternating magnetic field. This dissipation is generated by different physical mechanisms, experienced by each material according to its nature. Some examples include heat dissipation through the generation of Foucault currents (electrical conductors), through magnetic hysteresis due to the motion of domain walls (ferromagnetic materials), through magnetic hysteresis due to the irreversible displacement of magnetic flow vortices (high temperature superconductors) or through the effects of thermally induced magnetic relaxation (superparamagnetic materials).

The amount of dissipated heat and its dependence on the parameters of the alternating magnetic field are important design parameters where applications are concerned. In some cases, minimum dissipation will be required, as in the case of coils, transformers, high temperature superconductors, for power or magnetic cooling applications, and in other cases maximum dissipation will be required, as in the case of polymer curing, baking and welding by induction, or the use of magnetic nanoparticles in biomedical applications.

In recent years in particular, enormous progress has been made in research into the use of magnetic nanoparticles for the localised treatment of tumours by hyperthermia. Gilchrist et al. [Selective inductive heating of lymph nodes, Ann. Surg., 146: 596-606 (1957)] carried out the first experimental tests in 1957 by heating various tissue samples using maghemite particles of 20-100nm excited by an alternating magnetic field of 1.2MHz. However, the number of scientific publications on this topic has increased exponentially over the last 5 years. Various in-vitro as well as in-vivo experiments have been conducted, even on humans, and patents have been developed regarding procedures for manufacturing suitable nanoparticles and ferrofluids, as well as medical equipment to apply the therapy of hyperthermia induced by an alternating magnetic field.

Tumour treatment by induced hyperthermia is based on introducing, into the bloodstream or directly into the tumoral tissue, ferrofluids based on bio-nanoparticles with a magnetic core, encapsulated and vectorised for recognition and capture by specific cell receptors, thereby allowing their implantation in cancerous cells, and subsequent weakening or destruction thereof, by means of the heat dissipated by the magnetic cores upon being subjected to an alternating magnetic field.

The heat dissipated by the ferrofluids' magnetic cores varies according to the nanoparticle's dispersion medium, encapsulation and vectorisation, but especially according to its magnetic properties, and these in turn, according to the type of material, shape and size of the cores, crystallinity, size dispersion, interactions between cores, etc. Consequently, there is enormous interest in developing procedures for producing biocompatible ferrofluids stably and homogenously dispersible in physiological media, with coatings that allow them to elude and attack from the immune system and having functional groups on their surface allowing the anchoring of molecules with a biological functionality, but also with optimum heat dissipation in the biological range of magnetic field application: Field amplitude ($H_0$) less than 15kA/m and a frequency (f) between 50kHz and 1.2 MHz, with $H_0 \cdot f$ less than 485 kA·kHz/m.

Applying heat to organs and tissues can give rise to (a) moderate heating, of up to 41ºC in the case of human tissues, (b) hyperthermal effects, when the temperature is between 41ºC and 46ºC, causing cell destruction, or (c) thermoablation, when temperatures reach or surpass 56ºC, which entails tissue necrosis, coagulation and even carbonization, depending on the intensity of the energy applied. Therefore, in order to reach the required temperatures, it is fundamental to accurately know the heating power of ferrofluids for hyperthermal therapies, so as to deliver the right concentration of magnetic cores.

Also, the heating power is an important design parameter in the manufacture of ferrofluids for biomedical applications, since the higher the particles' heating power, the lower the doses required for application to patients.

The heating power per unit of mass of dissipating material is usually expressed in terms of the specific absorption rate (SAR) and is measured in W/g. The magnitude of this heating power is usually determined by measuring the rate of increase in temperature experienced by a sample upon being subjected to an alternating magnetic field. The material's SAR is equivalent to the product of said rate and the calorific capacity of the sample, divided by the mass of the dissipating material.

In the scientific literature, it is possible to find several non-commercial installations that measure SAR using the calorimetric method. These installations consist of a generating system for the alternating field, a flask surrounded by insulation and one or several temperature sensors. In general, the alternating field system consists of either an inductor element or coil, or of a magnetic core, together with the appropriate electronics for generating sinusoid signals of the suitable frequencies and fields. The flask, which contains the sample inside, reduces heat conduction outside by means of low thermal conductivity insulation. However, since it does not eliminate other sources of heat loss, such as convection through the surrounding air, or radiation, it is not an adiabatic system, in other words, it exchanges heat with the medium. With regards to the temperature measurement, a wide range of sensors are used, such as thermocouples, alcohol thermometers or pyrometers, of higher or lower accuracy.

Hiergeist et al. [J. Magn. Magn. Mat. 201, 420-422 (1990)] present a comparative study of the power emitted in the form of heat of various types of magnetite when subjected to a magnetic field, by means of calorimetric measurements in a device comprising a radiofrequency generator (410 kHz, 6.5 kA/m) and a 2-turn inductor element.

Hilger et al. [Acad. Radiol. 9, 198-202 (2002)] estimate the SAR of iron oxide particles based on calorimetric measurements in an alternating magnetic field (400 kHz, 6.5 kA/m).

Ma et al. [J. Magn. Magn. Mat. 268, 33-39 (2004)] determine the SAR of aqueous suspensions of different size magnemite particles in an alternating magnetic field (80 kHz, 32.5 kA/m) induced by a 3-turn coil.

Fortin et al. [J. Am. Chem. Soc. 129, 2628-2635 (2007)] use a coil (300 kHz - 1.1 MHz, 27 kA/m) cooled by a nonane circuit to study magnetically induced hyperthermia in iron oxide nanomagnets.

As can be appreciated, most inductor elements used in the state of the technique are solenoids or few-turn coils which, to generate a determined field, require the introduction of high currents, making the implementation of cooling means necessary and furthermore the field will not be uniform in general throughout the sample's extension.

The non-adiabatic nature of the described installations means that the sample heating rate, which must be constant at fixed frequencies and field amplitudes, diminishes progressively due to the appearance of heat losses towards the exterior. These losses, which increase with the field application time, given that the difference between sample and environment increases, are reflected in the graphic representation of temperature ($T$) over time ($t$) as a decreasing slope, which becomes zero once the heat losses equal the heat generated. From these representations, an approximate method has been established to determine the heating rate, calculating the temperature variation slope over time in the first moments of field application, based on the assumption that at these moments the difference between the sample temperature and the environment is minor and the heat losses negligible.

Thus, once the sample's calorific capacity (C) is known, SAR can be calculated by means of the expression:

$$SAR = a \cdot \frac{1}{m} C, \quad \texttt{wherein} \quad a = \frac{dT}{dt}\bigg|_{t \to 0}$$

$m$ being the mass of the dissipating material and a the slope of the sample's initial temperature variation over time.

This method is based, additionally, on a second approximation, given that it assumes that the temperature is homogeneous throughout the entire sample in the first moments of field application. In reality, in the initial moments of heating, the temperature of the different points of the sample can pass through a transient state, and their value will depend on factors such as sample homogeneity, geometry, size and thermal conductivity, meaning that the measured temperatures cannot be a reflection of the heating power. The fact that these assumptions cannot be verified results in a lack of reproducibility and in the presence of undetectable or unquantifiable errors in the SAR results.

Therefore, there is a justified need for a method that reliably and accurately measures a material's SAR so that it can be characterized with a view to its correct dosage and use in therapeutic treatments. Moreover, obtaining more accurate SAR values is important among other applications for developing simulations of the heat transport process and hyperthermia process in tissues and organic samples. It would further enable study of the correlations between the properties of the dissipating material and the dissipated power. In this sense, if the dissipation mechanism is known and there is a theoretical expression of the SAR according to the properties of the material it will be possible to determine indirectly the value of such properties, such as the resistivity of metals and alloys subjected to processes which alter their electrical resistivity in an unpredictable manner, by means of thermal treatments or hardening treatments as discussed later.

An accurate heat measuring method must rely on the adiabatic method, which is used, for example, to determine the absolute calorific capacities of solids (Cp). This determination consists of applying heat over a time interval to a sample that is unable to exchange heat in net terms with the environment. The applied heat power is equivalent to the quotient between the increase in temperature experienced by the sample and the time of heat application, multiplied by the sample's calorific capacity. An adiabatic facility for determining Cp consists of a container, a heater (resistor), one or several adiabatic screens with independent heaters, several temperature sensors, generally resistance thermometers and thermocouples, a vacuum or Dewar flask, vacuum system, electronics for supplying the heater and temperature measurement and control electronics. The sample is introduced into the container and heated by means of a resistive element, situated inside or wound around the container. The adiabatic nature of the installation is achieved by minimising heat losses from the container towards the exterior by means of: (a) one or several adiabatic screens surrounding the container, whose temperature is controlled using PID (*Proportional-Integral-Differential*) systems, in such a way that at all times it is equivalent to the temperature of the container, and no losses occur by radiation; (b) introducing this entire assembly into a high vacuum Dewar flask, in such a way as to minimise losses by convection and conduction through the surrounding gas; and (c) using the lowest possible diameter wires for temperature sensor measurements, thermally anchored to the radiation screen in order to minimise conduction thereby.

The most commonly used materials for manufacture are steel for the Dewar vacuum flask, steel for the screen support structure, container and sample, and oxygen-free copper for the screens. Steel is used for its resistance, low degasification in high vacuum conditions and, in the case of the Dewar flask, to reflect external radiation. The copper of the screens is used for its high conductivity and thermal diffusivity, so that the screen temperature can be changed rapidly in a homogeneous manner.

However, it is not possible to use a conventional adiabatic calorimetry facility in order to determine the SAR of a material in the presence of an alternating magnetic field, rather it is necessary to eliminate the heater from the sample, to couple a magnetic field generation system of the appropriate size and field parameters, as well as to eliminate all metal parts liable to become heated in the presence of the alternating field as a result of Foucault currents, which, in the case of conventional adiabatic installations, represents a high percentage of their parts. The most sensitive part to this metal part elimination is the adiabatic screen and its heater, since the use of high thermal conductor metals for the screen favour its functioning and a resistive heater must necessarily be made of an electrical conductor material.

The present invention provides a measurement method and device suitable for determining the heat dissipated by a material in the presence of a magnetic field in adiabatic conditions, since it consists of the necessary parts to avoid the net heat exchange between the sample and the environment by conduction, radiation and convection, at the same time as it is coupled to a suitable field generation system and does not have metal parts liable to generate heat in the field ranges and working frequencies.

**Brief description of the invention**

The present invention relates to a device according to independent claim 1 and to a method according to independent claim 19 to measure in adiabatic conditions the SAR of a sample of material subjected to an alternating magnetic field. Dependent claims 2-18 and 20-23 describe favourable embodiments of the present invention.

A first object of the invention is to provide a device and method adapted to use the adiabatic method of measuring SAR in the presence of a magnetic field. In this way, heat losses from the sample to the medium are minimized and all generated heat is invested in increasing the temperature of the sample. Thus, the device of the invention allows the SAR of materials to be determined in an accurate and reproducible manner, across a range of field frequencies and amplitudes.

Another object of the invention is to provide a device and method suitable for magnetothermally characterising a material against the field parameters (amplitude and frequency) and temperature, which is not offered simultaneously by other installations described in the state of the technique. Thus, it is possible to explore the combination of parameters that, for each material, maximises the amount of heat generated using the minimum amount of sample.

A further object of the present invention is to provide a device and method that allow the properties of the dissipating material to be determined indirectly if the dissipation mechanism is known and there is a theoretical expression of the SAR according to said properties.

These and other advantages and characteristics of the invention will be evident in the light of the drawings and the detailed description of the invention that follow.

**Description of the drawings**

In order to complement the description and with a view to facilitating a better understanding of the characteristics of the invention, in accordance with an example of a practical embodiment thereof, a set of drawings is included as an integral part of the description, which, by way of illustration and not limitation, represents the following:

Figure 1 shows a schematic representation of the adiabatic device of the invention.

Figure 2 shows an embodiment of the adiabatic device of the present invention.

Figure 3 shows an example of a measurement from a duraluminium sample representing the temperature over time in a measurement pulse and the record of the temperature differences during the adiabatic control.

Figure 4 shows an example of a measurement from a copper cylinder representing the temperature over time in a measurement pulse in adiabatic and non-adiabatic conditions.

Figure 5 shows the representation of the SAR value according to the square of the field amplitude in adiabatic and non-adiabatic conditions for the experiment represented in Figure 4.

Figure 6 shows three consecutive pulses and the incremental calculation of the heating rate ($\text{\textdegree C/s}$) in the case of a commercial ferrofluid (Chemicell GMBH) in adiabatic conditions and the record of temperature differences during the adiabatic control.

**Detailed description of the invention**

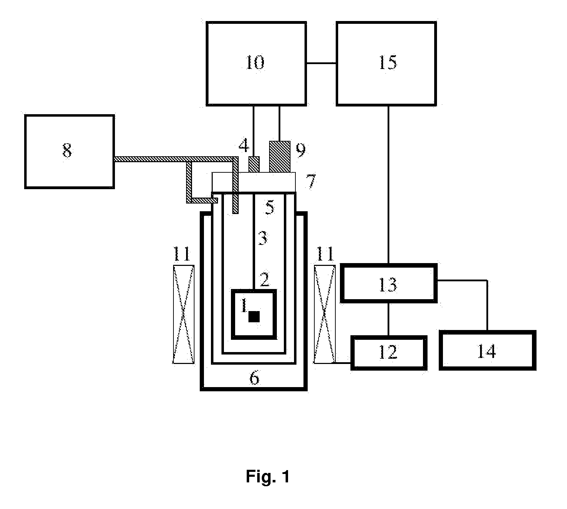

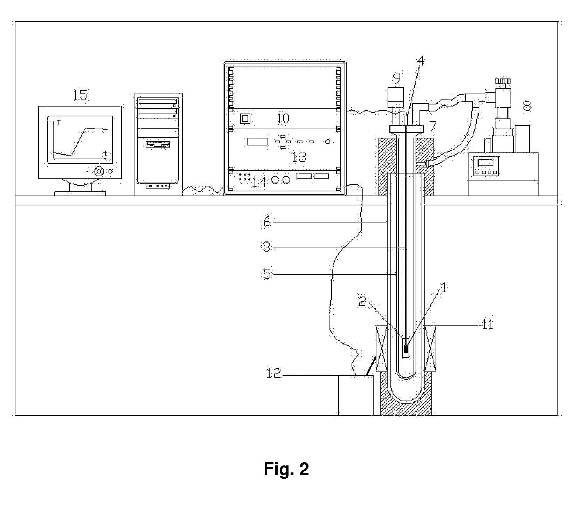

The adiabatic device of the present invention comprises an adiabatic radiation screen (2) which houses a sample (1) and prevents heat exchange with the medium; temperature sensor means; at least one Dewar flask to contain the adiabatic screen (2) and the sample (1); an inductor element (11) to contain the external Dewar flask (6) inside and generate inside a sufficiently homogeneous alternating magnetic field; a vacuum device (8); and an electronic power and excitation system (13). Figures 1 and 2 schematically show the components of the adiabatic device of the present invention according to a preferred embodiment. Next, the elements constituting the device of the present invention are described in detail.

*Adiabatic radiation screen (2)*

The adiabatic radiation screen (2) minimises the net exchange by radiation of the sample (1) with the environment. The presence of the adiabatic radiation screen (2) also minimises conduction losses through the temperature sensor wires by being thermally anchored thereto.

In adiabatic calorimetry systems these screens are made of materials with high thermal conductivity (thermal diffusivity), such as copper, to be able to rapidly and uniformly reach a temperature equal to the sample's temperature. In the adiabatic device of the present invention, however, the use of electrical conductor materials is not viable, given that in the presence of an alternating magnetic field currents are induced that give rise to significant heating, preventing an effective control of an adiabatic nature, given that the screen would reach temperatures in excess of that of the sample. Therefore, it is necessary to use for the screen (2) of the present invention a material that is a good thermal conductor and a poor electrical conductor.

In one embodiment, alumina ($Al_2O_3$) is a good candidate for the adiabatic screen (2), given that it has high thermal conductivity (k$\approx$ 30 W/m K) and a sufficient thermal diffusivity $\alpha \approx$ 0.1 $cm^2$/sec for a suitable control (copper has k $\approx$ 400 W/m K and $\alpha \approx$ 1.1 $cm^2$/sec). Additionally, the superficial roughness of the alumina must be sufficiently low (for example, $R_a$ < 0.5$\mu$m) since in a preferred embodiment, it is necessary to provide the screen with heating means by means of a process of physical vapour deposition. Nonetheless, other materials for the screen are possible, on condition that they fulfill the abovementioned requirements of high thermal conductivity and low roughness.

In a preferred embodiment of the invention, the screen (2) consists of a hollow sintered alumina cylinder with an external diameter of 40 mm, length of 60 mm and wall thickness of less than 2 mm. The solid upper base and hollow cylinder constitute in this embodiment what is referred to as part A of the adiabatic screen.

In this preferred embodiment, the lower base is an alumina lid (thickness of 2 mm) of a size adjusted to the cylinder's outer diameter and that attaches thereto by means of screws or pins of a non-metal material, such as plastic or wood. This lower base or lid constitutes what is referred to as part B of the adiabatic screen.

As previously discussed, in a preferred embodiment, the radiation screen (2) is provided with heating means which consist of resistive deposits obtained through a process of physical vapour deposition using an arc evaporation technique. Two independent deposits have been carried out. One basically consists of a conductor track with a width of 4 mm and length of 480 mm which runs across the entire outer surface of part A of the screen in a crenellated fashion with the longest dimension oriented in the same direction as the applied field. The other resistive deposit has been carried out on the outer face of part B of the screen, since the temperature control of parts A and B is carried out independently. This second resistive deposit consists of a conductor track with a width of 2 mm and length of 233 mm with a crenellated shape adapted to the lid's circular geometry.

Selection of the type of alloy and thickness of the coating will depend on the final resistance required and its distribution for uniform heating of the entire screen. Also, heat generation due to the potential currents induced by the alternating magnetic field must be avoided in such a way that temperature control is possible.

The dissipated power is proportional to the square of the lower dimension of the resistive component and inversely proportional to the resistivity of the alloy employed. In a preferred embodiment, a Titanium Nitride (TiN) alloy with a thickness of 1-1.5 $\mu$m is used for the screen (2) heater, which gives rise to a negligible power from induced currents (P < $10^{-6}$ $W/m^2$) and to an electrical resistance of 25-50 $\Omega$. This type of coating, considering the substrate's roughness and thickness, reaches a high and sufficient level of adherence.

The supply of current to the heating means is carried out in the present embodiment by means of fine copper wires. The electrical contact between the latter and the resistive track is obtained through welding with a conductive paste, for example of the epoxy resin type with silver particles, which once cured provides sufficient mechanical resistance. These copper wires reach the screen through the support means and cable guide (3). Under the action of the alternating magnetic field, these wires do not prevent or alter the functioning of the control electronics.

*Samples and sample holders (1)*

The adiabatic device of the present invention can characterize both solid as well as liquid materials. For solid materials the use of a sample holder is not necessary. In this case, once the sample of the material has been cut (for example, in the shape of a cylinder or prism of dimensions 5 x 5 x 10 mm), in one embodiment the welded connections of a differential thermocouple are adhered (the sensor that measures the temperature difference between part A of the screen and the sample) along with those of a second thermocouple, which measures the temperature of the sample (1). Another potential embodiment entails making a hole in the sample (in a preferred embodiment, of 1-2 mm in diameter and 3-5 mm in depth) where both connections are introduced.

If permitted by the nature of the sample, the thermal contact between said welded connections and the sample is carried out with a small amount of GE varnish (General Electric) which has good thermal conductivity and is an electrical insulator. If the sample is not compatible with the aforesaid varnish, other compatible adhesives or greases can be used.

The wires of the thermocouple carry out the support function if the weight of the sample allows it. In the case of a heavier sample, a fine wire of a non-metal material is fixed around the sample and said wire is anchored to the top part of part A of the screen, leaving the sample hanging from it. In a preferred embodiment, a fine nylon wire is used (low thermal conductivity material, $k < 0.25$ W/K m).

In the case of liquid samples (for example, ferrofluids) a sample holder is used. In a potential embodiment this sample holder is made of a quartz tube of 10-20 mm in length with an internal diameter of 6-8 mm closed at one end. Once the liquid sample has been introduced inside (volume of approximately 0.3-0.4 ml) it is closed with quartz lid applying a cyanoacrylate adhesive. In this embodiment the total mass of the quartz and adhesive is 1-2 g and 30-50 mg, respectively.

Once the adhesive has been applied it is left to cure for several hours at room temperature thereafter checking the level of sealing. Using this sealing method a loss of mass of less than 0.1 % has been reached in all cases.

The corresponding sensors for measuring the temperature of the sample-sample holder system adhere to the surface of the quartz tube by means of cigarette paper impregnated in GE varnish, which provides a sufficient mechanical consistency and very good thermal contact between said connections and the sample holder. In this case fine wire is resorted to as the element for fastening the sample-sample holder system.

Hereinafter, the term "sample" shall be used to refer to a solid sample or the sample-sample holder system in the case of a liquid sample.

*Dewar flask*

The adiabatic radiation screen (2) and the sample (1), in addition to other elements described below, are contained inside a glass Dewar flask (or vacuum flask). The adiabatic device may comprise one or more additional Dewar flasks to contain the Dewar flask containing the screen (2) and the sample (1).

The Dewar flasks of the adiabatic device do not have a metal polish, unlike those traditionally employed in cryogenic uses or adiabatic calorimetry measurements, given that this polish is incompatible with the use of high frequency electromagnetic fields.

The Dewar flask that contains the screen (2) and the sample (1) is provided with an internal chamber, which houses the abovementioned components and that is open at its top, and an outer sleeve, where a vacuum can be created or gases introduced through a glass connection, with a view to controlling the thermal contact between the internal chamber (sample environment) and the exterior.

In a preferred embodiment of the invention, shown in Figures 1 and 2, the adiabatic equipment comprises two Dewar flasks: one internal Dewar flask (5) to contain the adiabatic screen (2) and the sample (1) and one external Dewar flask (6) which contains the internal Dewar flask (5) and allows low temperature measurements to be taken, by introducing a cooling liquid inside.

In one embodiment, the internal Dewar flask (5) has a test tube shape, with an upper finish in the form of a Schott connection and with dimensions of 1070 mm height, 85 mm outer diameter and 65.5 mm inner diameter.

In a preferred embodiment, the internal Dewar flask (5) is kept in a fixed and vertical position by support means that may be made of plastic, for example polyvinyl chloride (PVC), with a height of 250 mm, outer diameter of 247 mm and inner diameter of 85 mm, placed on a flat surface with an orifice diameter of more than 220 mm and less than 247 mm concentric with the support means.

In this embodiment, the internal Dewar flask (5) is introduced through the inner orifice of the support means, remaining suspended and supported on the lower part of its Schott connection. Also, the support means have two more side orifices, of 20 mm in diameter to facilitate the filling of an external Dewar flask (6) with cooling liquid and to allow the exit of the gases from said cooling liquids.

In this preferred embodiment, the internal Dewar flask (5) is contained in an external Dewar flask (6), also in unplatted glass. The external Dewar flask (6) is surrounded by a non-metallic opaque sheath, to isolate the sample from surrounding light. As previously mentioned, the purpose of the external Dewar flask (6) is to be able to hold liquid nitrogen or another cooling liquid in order to carry out measurements at below room temperatures.

In one embodiment, this external Dewar flask (6), has the shape of a test tube open at its top, has a sealed vacuum sleeve and its dimensions are 910 mm height, 160 mm outer diameter and 125 mm inner diameter.

In a preferred embodiment, the external Dewar flask (6) is placed concentrically with the internal Dewar flask (5). This arrangement and its verticality are achieved by housing the upper part of the external Dewar flask (6) inside the support of the internal Dewar flask (5) and its lower part on plastic support means (high density polyethylene - HDPE), which are placed on the ground.

In order to achieve adiabatic conditions a vacuum must be created in the internal Dewar flask (5) in order to minimize the contribution of losses by conduction and convection due to the presence of air or gas.

In one preferred embodiment, the vacuum in the sample's environment required to minimize losses by thermal conduction and convection through the gas is achieved by closing the top part of the internal Dewar flask (5) by means of a stainless steel connection lid (7), which is placed on the Schott connection of the internal Dewar flask and is closed with a gasket and clamp. This lid (7) is positioned sufficiently far away from the inductor element (11) that generates the magnetic field so as to not become heated during its functioning. On its lower part, it may have a screwed on support tube and cable guide (3). On its upper part, it has at least two connections with through-holes. One of them houses a sealed connector (4) for the passage of the electrical cable and the other connection is joined to a flexible stainless steel tube through which the vacuum is created, and may be connected to a pressure gauge (9).

*Temperature sensors*

The temperature of the sample and of the screen (parts A and B) is measured using temperature sensors, not represented in the Figures, specifically thermocouples and resistance thermometers.

In particular, in a preferred embodiment of the device of the invention a thermocouple has been used to measure the temperature of the sample, adhered thereto by means of GE varnish, as in the case of all other welded connections of the thermocouples. At the same time, a differential thermocouple is used with a welded adhered connection to the thermocouple connection which measures the temperature of the sample while the other connection is adhered to the inner and side part of the screen's cylinder (part A). This differential thermocouple is the error signal for the temperature control of the screen's part A and can also calculate the temperature of part A of the screen when combined with the thermocouple measurement of the sample. Another differential thermocouple with an adhered connection on the internal face of part B of the screen and another adhered connection on the lower side part of part A of the screen allows control of part B and to know its temperature.

The type of thermocouple is selected bearing in mind that the alternating magnetic field must not affect its voltage and that losses by conduction through the cables must be minimized. In a preferred embodiment, type E (Chromel-Constantan) thermocouples can be used with a sensitivity of 60 $\mu$V/K at room temperature made of Teflon-insulated wires of 0.1 mm in diameter. In this preferred embodiment, the thermocouples come from the sealed connector (4) of the upper lid (7) and are thermally anchored to the side of part A of the screen on its internal surface. This thermal contact, the length and diameter of the wires reduce losses by conduction. The effect of the variable magnetic field on the signal of the thermocouples has been measured experimentally and is negligible.

In this preferred embodiment, on the internal part of part A of the screen a Pt thermometer is also placed calibrated in the range of 70-500 K. This sensor on the one hand measures the screen temperature with higher absolute precision ($\pm$25 mK) and, on the other hand, checks whether the measurement obtained by the thermocouples, in the absence of an alternating magnetic field, is correct. This thermometer is housed in this embodiment in an alumina cylinder, adhered with GE varnish to the side of part A of the screen, together with Apiezon grease to increase the thermal contact. Its position is near the thermocouple connections situated on part A of the screen (2).

*Inductor element (11)*

The alternating magnetic field is generated by means of an inductor element (11) (coil or solenoid). In the present embodiment, said inductor element is a coil, through which an alternating current is made to circulate (in the present embodiment, in the frequency range of 50kHz up to 500kHz), generating a magnetic field inside, where the adiabatic system is located.

The geometry of the inductor element (11) must adapt to a series of factors:

- Its diameter must house the two Dewar flasks inside, in other words, must contain the external Dewar flask (6).
- Its height must allow the sample to be positioned in the centre of the coil (11), guaranteeing that it is exposed to a known level of field.
- The ratio between the length and diameter must be such that there is a sufficiently uniform field inside the coil (11), so that it may be considered that the entire sample is subjected to the same field.

For example, the electromagnetic simulation of a coil (11) of 200 mm in height and 200 mm in diameter confirms sufficient field uniformity for typical sample holder dimensions. Also, the diameter of this coil (11) is suitable for containing the external Dewar flask (6) of the preferred embodiment of the invention.

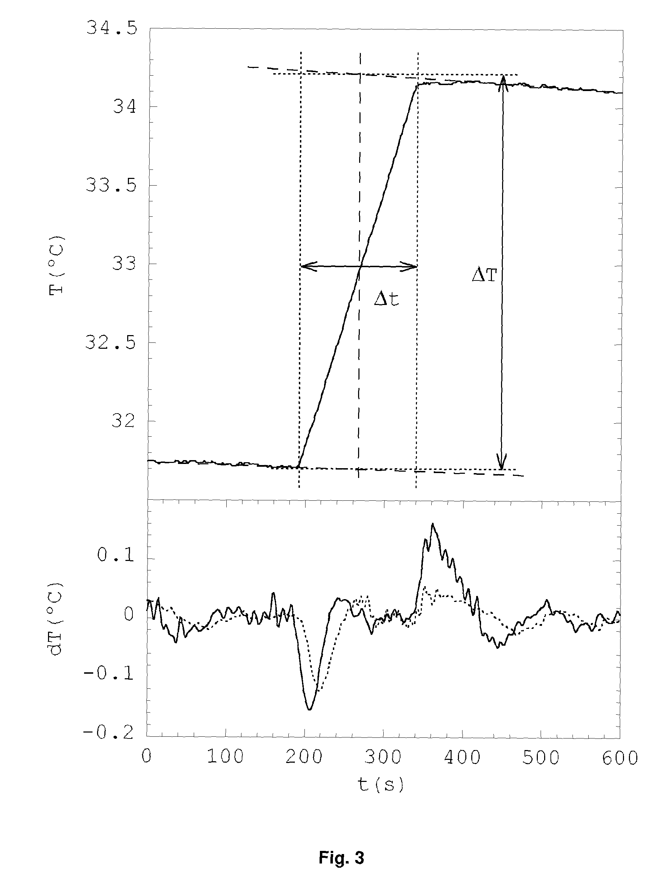

The coil (11) has been designed with the appropriate insulation for situations of highest voltage between turns (typically, 2 to 5 kV). In contemplation of working with current levels no higher than 50A at peak, the coil (11) employed in the experiments represented in Figures 3-6 was manufactured using Litz wire of approximately 190 strands of 0.1 mm each. In this way, losses through dissipation in the cable are minimized, especially with excitations at highest current and frequency. This dissipation must be minimized not only for reasons of the system's efficiency but also in order to minimize the sources of heat that could cause problems in the experiments. This additionally avoids a complex cooling of the coil (11), as in other equipments in the state of the technique, the use of small ventilators being sufficient in the case of the most intense fields.

The coil (11) of this embodiment has been designed with a total of 30 turns, a compromise between the possibility of situating them within the 200 mm of height and the possibility of generating the required levels of field (in this embodiment, for example, up to approximately 8 kA/m). Mechanically, the coil (11) has been built on a support, thereafter fixing the turns with epoxy. Once hardened the support is removed. Also, the coil (11) has been coated with a Kapton-type film, in order to guarantee its protection and high voltage electrical insulation from the environment.

The coil (11) must have a resonance frequency higher than the upper frequency limit of the required measurement range. Thus, in the embodiment of the designed case it has been experimentally characterized, checking that its resonance frequency (3.9MHz) was far above the required working range, that the inductance value was uniform throughout the range of working frequencies (129$\mu$H between 50kHz and 500kHz) and that its equivalent series resistance was minor (0.3$\Omega$ to 1$\Omega$ across the entire range).

*Capacitor bench (12)*

The coil (11) forms part in the present embodiment of a series resonant circuit together with a capacitor or bench of capacitors (12) (LC circuit), excited from a stage of power working in class D (half-bridge type topology although another option is the full bridge) depending on the type of implemented control.

In general terms, the capacitor needed to work with the inductor element (11) must meet the following requirements:

- To resonate with the inductance of the inductor element (11) at the working frequency. Since the resonant system is of very high quality (very low resistance value), in order to cover the entire frequency range it is necessary to change the capacitor value. Thus, for example, to work at a frequency of approximately 100kHz a capacitor of approximately 15nF is used and for 500 kHz, of 1 nF.
- It must be capable of withstanding the passage of current in conditions of higher excitation (for example, 50A of peak).
- it must be capable of withstanding the voltage level associated to the load's resonance condition (typically, 2 to 5 kV).

In a preferred embodiment, this capacitive system has been implemented as a series/parallel capacitor bench (12), built on a plate located inside a box and situated close to the inductor element (11). The capacitors in a preferred embodiment are made of polypropylene to guarantee good performance at high frequencies. The box is provided with a simple connect-disconnect system for operations of changing the capacitor's value and therefore the measurement frequency.

*Electronic power and excitation system (13)*

The electronic power and excitation system (13) excites the inductor element (11) - capacitor bench (12) assembly to operate in a range between tens and hundreds of kilohertz (in the present embodiment, 50 kHz-500 kHz).

The power supply of the excitation system is obtained from a commercial DC source (14), variable and susceptible to control by a control system. The power of this source (14) may be between hundreds of watts and a few kilowatts, depending on the required level of excitation. In a preferred embodiment, a source of 3kW has been used so as not to have serious limitations on the changes in the resistive load of the LC block. The voltage variation range is from 0V to approximately 150V manually or from the telemetry port situated on its rear part. The level of field generated in the coil (11) is approximately proportional to this voltage value.

In the present embodiment, this power source (14) supplies a high frequency amplifier/generator of the commuted type (class D) which provides a system that is efficient on an energetic level, small and without major ventilation or cooling requirements. This stage is integrated into a 19" rack together with the control circuitry, protections and filters required for a correct operation.

The working frequency is generated internally with a circuit based on crystal, in such a way that its stability is very high, guaranteeing good performance in experiments of a long duration.

A display and keyboard allow the user to configure the working frequency and level of excitation in the coil (11). The level of excitation can also be configured by means of a computer.

The control system supervises the correct functioning of the device, protecting the system from anomalous working situations and electronic stress. Also, this control system includes a tuned working mode which allows the working frequency to be tuned into the resonance frequency of the LC loading circuit guaranteeing optimum work of the stage and a suitable injection of current in the load.

The current injected into the inductor is measured with a commercial probe in order to guarantee its reliability.

The system allows the level of the DC source to be adjusted through an analogue output by a connector on the rear part if the selected source of power has this type of analogue control.

The entire device can be externally controlled in its basic functions through an RS232 port and by means of a simple communications protocol.

### Vacuum equipment (8)

In order to create the vacuum a complete vacuum device (8) is used, in a potential embodiment consisting of a dry diaphragm turbo molecular pump (to avoid the presence of oils) with a pumping speed of at least 33 I/s, and having a final vacuum obtained at the pump mouth of $< 10^{-8}$ mbar.

In the preferred embodiment of the present invention, with this system connected to the input of the internal Dewar flask (5) through the lid (7) a vacuum of $5 \cdot 10^{-4}$ mbar is achieved inside the internal Dewar flask (5) after 5 hours in the presence of a sample. The level reached after 12 hours is $10^{-4} - 8 \cdot 10^{-5}$ mbar. This pressure may be considered the system's final pressure, mainly due to the degasification of the plastic components employed. The use of materials with a lower degasification level together with a higher pumping speed vacuum pump would allow the pressure to be reduced below $10^{-5}$ mbar and to do so in less time.

The pressure evolution is measured by means of a full-range Pirani-Penning ($5 \cdot 10^{-9}$ - 1000 mbar) pressure gauge (9) connected to one of the connections of the lid (7). The vacuum equipment (8) can be isolated from the system by means of a VAT angle valve manually operated, in such a way that once closed the adiabatic device can be opened for subsequent handling.

This vacuum device (8) is connected to the adiabatic device by means of flexible stainless steel tubes and by means of a cross-shaped connection in such a way that Helium gas can also be introduced inside the internal Dewar flask (5) (using a fine tap) and in the vacuum chamber of the internal Dewar flask (5) to put in contact or isolate the inside of said internal Dewar flask (5) from the cooling liquid found inside the external Dewar flask (6), as well as to create a vacuum in said chamber. This possibility allows the temperature to be reduced below room temperature and to carry out tests within said range.

The pressure evolution inside the internal Dewar flask (5) is recorded by software, allowing detection of any anomaly in the process. For example, its monitoring is fundamental to detect incorrect closing of the sample holder.

All connections are standardized and correspond to DN 40 ISO KF and DN 25 ISO KF.

In this embodiment, the use of the vacuum device (8) in a normal test entails that once the adiabatic device is closed and the sealed electrical connector (4), the pressure gauge (9) and the flexible tube attached to the vacuum device (8) are connected, the valve is opened and the vacuum device is switched on, which once it reaches the required pressure level, activates the turbo molecular pump that allows the highest level of vacuum to be reached.

Once this situation has been achieved, the measurement method can be applied as many times as necessary.

The system's rapid cooling process involves closing the valve and switching off the vacuum device and introducing gas (air) inside the internal Dewar flask (5) until reaching the required temperature. This process in the case of below room temperatures involves carrying out the previous step but introducing helium gas both inside as well as in the chamber of the internal Dewar flask (5) so as to place the screen-sample system in thermal contact with the cooling liquid of the external Dewar flask.

Once the required temperature has been reached, the gas taps are closed and the valve is opened connecting the vacuum device (8), which once again allows the appropriate level of pressure to be reached to be able to start the measurement method.

### Support tube and cable guide (3)

In a preferred embodiment of the present invention the adiabatic screen (2) has on its upper base an orifice housing support means and cable guides (3), joined by means of two pieces of plastic (PVC, for example) threaded to said tube.

The sample-adiabatic screen system is fastened in this preferred embodiment by means of a plastic tube of 1060 mm in length, 10 mm in diameter and with a wall thickness of 2 mm. Bakelite can be used, since, on the one hand, it is a material with low thermal conductivity (k < 0.30 W/m K), which reduces heat exchange by conduction with the exterior and, on the other hand, is an electrical insulator, meaning that currents induced by the action of the alternating magnetic field are not induced. Also, this material has sufficient mechanical resistance and does not present distortions when it experiences moderate heating (T < 60ºC) for prolonged times. The use of a tube made of another material with lower thermal conductivity, lower diameter and thickness also allows its conductance to be reduced thereby favoring the system's insulation.

The length of this tube makes it possible to have the upper metal lid (7) sufficiently far away from the inductor and, therefore, the heating of said lid and of the pressure gauge (9) through the action of the alternating magnetic field is negligible.

Moreover, all the thermal sensors and heating means of the adiabatic screen (2) reach the sample-screen system through this tube. The cabling of the heating means reaches the screen (2) through the outer part of the tube whereas the cabling of the platinum thermometer and the thermocouples do so through the inside.

_Temperature measurement and control module (10)_

Readings from the temperature sensor and the temperature control of the adiabatic screen (2) are conducted by means of a temperature measurement and control module (10). In a preferred embodiment, this module (10) consists of the following parts:

- Measurement circuit of the thermocouple for the sample (type E).
- Measurement circuit of the differential thermocouple for the sample-part A of the screen (type E differential).
- Measurement circuit of the differential thermocouple for part A - part B of the screen (type E differential).
- Power supply and measurement circuit of the platinum thermometer.
- Power supply circuit of the heater for part A of the screen.
- Power supply circuit of the heater for part B of the screen.
- Reference temperature measurement circuit and sensor of the thermocouple for the sample.
- Commuted sources for supplying the electronic circuits.
- Data acquisition cards (USB output).

_Measurement circuit of the thermocouple for the sample (type E)_

The signal coming from the thermocouple is amplified with a high gain operational amplifier (typically 5000) with offset compensation and a low pass filter before entering the data acquisition card.

_Measurement circuit of the differential thermocouple for the sample-part A of the screen (type E differential)_

This circuit is responsible for the analogue processing of the voltage generated by the differential thermocouple for the sample-part A of the screen. The signal is adapted and filtered to prevent saturation of the high gain amplification stage (typically 10000) designed around an accurate and low noise instrumentation amplifier. A final low pass type filtering generates the appropriate signal for the data acquisition card.

_Measurement circuit of the differential thermocouple for part A - part B of the screen (type E differential)_

This circuit is similar to the one described above but is responsible for processing the voltage of the differential thermocouple between part A and part B of the screen.

_Power supply and measurement circuit of the platinum thermometer_

The power supply stage consists of a precision voltage regulator configured as a constant current generator of great stability. This current of 1 mA supplies the platinum (Pt) resistance and the generated voltage, after amplification (with gain 10 op-amp and filtered), is entered into the data acquisition card.

_Power supply circuit of the heater for part A of the screen_

The current injected into the heater of part A of the screen comes from a commuted power source activated through an analogue output line of the data acquisition card controlled from the computer.

*Power supply circuit of the heater for part B of the screen*

This circuit is similar to that of the heater for part A of the screen, but in this case the current is injected into the heater for part B of the screen.

*Reference temperature measurement circuit and sensor for the sample thermocouple*

The reference temperature for the sample thermocouple is obtained, for example, from a precision LM35-type sensor (10mV/ºC) or with a pt100 thermoresistance. This sensor is placed on the outer part of the temperature measurement and control module and is housed on a thick plate of aluminium on which the input connector to the module is also situated. Since this connector is joined to the cold connection of the sample thermocouple, the temperature of the sensor is equivalent to that of said connection and is considered the reference temperature.

Before being introduced into the data acquisition card, the signal is amplified and filtered with an operational amplifier (typical gain 10).

*Commuted sources for supplying the electronic circuits*

The electronic circuits described above are supplied by means of two commercial commuted sources. One of them has two double outputs (+12, -12; +5, -5) and the other is a simple output of +48V.

*Data acquisition card*

The data acquisition cards are from National Instruments (NI USB-6008) USB interface, each one having 2 analogue outputs, 8 analogue inputs and 12 digital inputs/outputs.

*Casing*

All parts of the modules are installed in a casing fitted with a ventilator, a power switch, external USB connectors (from the cards), 2 external BNC connectors and one external (MOLEX) connector of 14 pines.

<u>*Registration, visualization and control means (15)*</u>

A preferred embodiment of the present invention uses registration, visualization and control means (15) implemented as a programme developed in a LabVIEW® environment. These registration, visualization and control means (15) control and register the relevant signals and parameters corresponding to the alternating magnetic excitation, the temperature values of the readings from the temperature measurement and control module (10), the proportional-integral-differential (PID) control of the temperatures of the adiabatic screen, and real-time control and visualization of data measurement and acquisition.

This programme has a main interactive screen for programming and visualizing experiments and manages the following aspects:

*Reading and controlling alternating magnetic field parameters:*

The program can both write and read the current supply values for the coil from the interactive screen.

*Obtaining temperature values:*

The programme converts the voltages acquired by the temperature measurement and control module into temperatures, by means of voltage/resistance versus temperature conversion ratios corresponding to each type of thermal sensor.

*PID control of the temperatures of the adiabatic screen:*

The programme determines the supply currents for the heating means of the adiabatic screen in an individual manner by means of two PID control subroutines. In both cases, the current that needs to be injected into the heating means is calculated so that the screen temperature is equal to that of the sample during the measurement process.

The temperature control functions by considering the voltages of the differential thermocouples (sample - part A of the screen and part A of the screen - part B of the screen) to be the input signal and acting in such a way that they are zero. The process time interval is governed by the control time, which is set by the user.

*Real time measurement control and visualization:*

The programme's main interactive screen allows both visualization as well as control of the measurement process in real time.

Said screen can be used to modify in real time the alternating field amplitude, the field application time, the PID parameters of the heating means (constants and control time), the upper and lower power limit of the heating means and the data acquisition interval.

The values of the experimental variables are updated with the control time and display the numerical values of the measurement time elapsed, the temperatures of the sample, part A of the screen (thermocouple and thermometer), part B of the screen as well as the reference temperature, the differential signals of the thermocouples, equivalent temperature differences, heating power percentages employed, coil current and applied field amplitude.

Finally, the variation of sample and screen temperatures, as well as of the differential temperature control and applied field signals, are displayed graphically.

## *Measurement method*

In a second aspect, the present invention provides an adiabatic method for measuring the specific absorption rate (SAR) of a sample subjected to an alternating magnetic field.

The sample (1) of the material to be characterized is placed inside the adiabatic screen (2) of a device according to the present invention. Once the appropriate vacuum conditions are met, the sample (1) is subjected to a homogeneous alternating magnetic field created by the inductor element (11). The evolution of the sample's temperature is monitored over time in the presence of the magnetic field and the change in temperature ($\Delta T$) is determined during the time interval ($\Delta t$) of the magnetic field's application.

In adiabatic conditions such as those achieved using the device of the present invention, it may be considered that upon applying an alternating magnetic field, the increase in temperature of the sample is due entirely to the heating power generated by the dissipating material, therefore the SAR can be calculated from the expression:

$$SAR = \frac{1}{m} C \cdot \frac{\Delta T}{\Delta t}$$

wherein $\Delta T/\Delta t$ is the quotient between the total increase in temperature of the sample during the application of excitation and the application time interval.

In this case, the temperature measurement takes place in already stationary conditions, for suitable time intervals and the change in temperature ($\Delta T$) during the magnetic field application interval is determined as the difference in temperature in the final and initial moments of the field's application. This determination of the SAR is suitable for ideal cases, in which the sample's temperature remains constant when excitation is eliminated (once the period of thermal homogenization has been reached) since there are no losses.

However, in real cases, said temperature presents a slight thermal deviation due to minor heat losses or contributions, the value of which is determined by the experiment's adiabatic conditions. In this case, and assuming that the leaks fulfill Newton's law, the correction can be made by extrapolating the temperature behaviours over time before and after applying the field, and calculating the $\Delta T$ increase of the difference of both extrapolations at the mid-point of the excitation time interval (figures 3, 4 and 6).

The method and device of the present invention allow the frequency and amplitude of the alternating magnetic field to be selected and controlled.

This described method is the most suitable for determining the SAR using the developed adiabatic device. However, this installation can also measure temperature increases in non-adiabatic conditions, by deactivating the control of the radiation screen and keeping the space for the sample at room temperature, as will be shown below in one of the experimental examples.

## EXAMPLES

Measurements of heating power dissipated by induced or Foucault currents in metal cylinders subjected to an alternating magnetic field.

The theoretical calculation of the dissipated power in the form of heat per unit of mass for the case of a semi-infinite cylinder subjected to a longitudinally applied alternating magnetic field [M.T. Thompson, IEEE Transactions on Magnetics, 34 (1998) 3755] with an operating frequency above the so-called critical frequency, $f_c = \dfrac{1}{\pi R^2 \mu \sigma}$ and,

therefore, wherein the depth of penetration $\delta$ is very small against R, corresponds to: $SAR = \dfrac{H_o^2}{m \sigma \delta} \pi R L$ wherein $\sigma$

is electrical conductivity and $\sigma$ is penetration length, of value $\delta = \sqrt{\dfrac{1}{\pi f \mu \sigma}}$ .

The two following measurement examples, with different objectives, compare this theoretical value with the experimental one obtained using the device according to a preferred embodiment of the present invention.

Example 1: Duraluminium Cylinder (2219)

This example illustrates the possibility of determining the electrical resistivity of metals and alloys based on adiabatic SAR measurements.

Sample

The sample corresponds to a cylinder of length L = 10.35 mm, diameter 2R = 4.15 mm and mass $m_{Al}$= 0.3892 g. These dimensions entail a ratio L/R = 4.99, which allows the cylinder to be considered semi-infinite in a first approach.
Once mechanised, the duraluminium cylinder underwent an electronic microscopy sweep assay in order to obtain its precise composition, which turned out to be 97.2 %at Al and 2.8%at Cu. This composition is in line with that expected for a 2219 alloy, which is supplied with an artificial ageing thermal treatment, in this case of type T4, which increases its resistivity in respect of that of aluminium, to values of $\rho$ = 6.20-6.40·10-8 $\Omega$·m [P. Olafsson et al., Journal of Materials Science 32 (1997) 4383 and Aluminium and Aluminium Alloys, ASM specialty Handbook, edited by ASM International, (1993)]. The cylinder did not undergo any extra thermal treatment after mechanisation so as not to modify the aforesaid treatment, and therefore, the asperity generated thereby was not reduced, which translates into an additional increase in the electrical resistivity in the region close to the surface.
The cylinder has been arranged in parallel to the longitudinal axis of the coil in such a way that the variable magnetic field is applied in the direction of the cylinder axis. This has been achieved by suspending it from the adiabatic screen by means of two nylon wires. Fastening thereof requires the use of a minor amount of Teflon film, of mass 26.8 mg. Finally, the thermocouples were fixed to the lateral face using a small amount of GE varnish, of negligible mass.

Measurement conditions

The cylinder's SAR was determined in adiabatic conditions, with vacuum levels of 1.6 - 1.9·10-4 mbar. 10 pulses were applied using alternating magnetic fields of 108 kHz frequency and amplitudes comprised between 0.4 and 1.7kA/m. In these conditions and considering a resistivity of 6.4·10-8 $\Omega$·m, the critical frequency is of 3765 Hz, much lower than the working frequency, meaning that the SAR expression described above is valid. The field penetration length is of 3.87·10-4 m, in other words, the part that contributes to the dissipation is a superficial layer of about 400 $\mu$m. The working temperature range is between 30 and 50ºC.

Results

Figure 3 shows, at its top, an example of one pulse carried out applying a field of amplitude 0.68 kA/m during 148 s in adiabatic conditions, where the linear behaviour in the heating process and two balancing processes can be observed, as well as the graphic calculation of the $\Delta T/\Delta t$ quotient for the case of minor heat losses, which results in 0.0165ºC/s. On its bottom part, the temperature differences during the adiabatic control can be observed. Outside of the field application (t = 192 s) and suppression (t = 340 s) moments, when the sample's temperature slope changes abruptly, the temperature differences are less than $\pm$ 0.04C, indicating sufficiently adiabatic conditions. At the moments of field application and suppression, these differences increase up to $\pm$ 0.15ºC, due to the fact that the PID constants are optimised for measuring ferrofluids, which tend to present less abrupt temperature variations in the working conditions of this example.
The C value required to calculate the SAR based on the $\Delta T/\Delta t$ quotients has been obtained by using the Cp data of the 2219 alloy (0.864 J/g·K) [Aluminium and Aluminium Alloys, ASM specialty Handbook, edited by ASM International, (1993)] and of Teflon (1.172 J/g·K) for the range of working temperatures, resulting in a total value of 0.3677 J/K. The SAR values obtained, set out in table 1, increase linearly with H02 in accordance with the theoretical expression, and the slope of said dependency is 0.0337 W·m2/g·kA2, from which a SAR of 0.0337 W/g is inferred for a field of 1 kA/m.

Table 1. SAR values of the duraluminium cylinder for a frequency of 108 kHz and different field amplitudes.

| H0 (kA/m) | SAR (W/g) |
| --- | --- |
| 0.47 | 0.00752 |
| 0.68 | 0.0156 |
| 0.89 | 0.0261 |
| 0.934 | 0.0297 |
| 1.10 | 0.0416 |
| 1.13 | 0.0436 |
| 1.29 | 0.0586 |
| 1.52 | 0.0780 |
| 1.52 | 0.0773 |
| 1.72 | 0.0994 |

Based on the theoretical expression of the SAR and, considering an electrical resistivity value of the alloy of 6.40 10-8 $\Omega$·m [Aluminium and Aluminium Alloys, ASM specialty Handbook, edited by ASM International, (1993)], a theoretical SAR value is obtained of 0.0286 W/g for 1 kA/m and 108 kHz.

The experimental value of the SAR is 18% higher than the theoretical value. This higher dissipation power may be due to border effects (non semi-infinite cylinder), a minor deviation of perfect verticality, since the theoretical value for the case of a cylinder perpendicular to the field is double that in the longitudinal case [M. Zahn, IEEE Transactions on Magnetics, 33 (1997) 1021] but, most probably, is due to the effect of the hardening treatment on the material, which translates into an inexact value of electrical resistivity employed. Assuming that the border and orientation effects are negligible, an experimental value of resistivity is inferred of 8.89 10-8 $\Omega$·m, an increase that results from the asperity caused by the mechanisation.

Thereby one of the device's applications is illustrated, corresponding to determining the electrical resistivity of alloys due to their thermal treatment and/or work in cold, based on the comparison between the theoretical and experimental dissipated powers.

Example 2: Copper cylinder

This example illustrates the differences between the results from determining SAR adiabatically and non-adiabatically, and their comparison with the theoretical estimation.

Sample

The sample corresponds to a cylinder of length L = 19.85 mm, of diameter 2R = 2.60 mm and of mass $m_{Cu}$ = 0.8956 g. This represents a ratio of L/R = 15, in such a way that it can be considered semi-infinite in a first approach.

The Cu cylinder, once mechanised, was subjected to a rebaking thermal treatment at T = 500ºC during one hour, with a view to reducing superficial hardening from working in cold, and having a material with the electrical conductivity inherent to Cu without deformation. Following rebaking, the superficial layer was eliminated through immersion in a solution of diluted HN03. The indicated dimensions and mass correspond to the sample after the treatment.

The cylinder was suspended from the screen using two nylon wires in parallel to the coil's longitudinal axis, in such a way that the variable magnetic field was applied in the direction of the cylinder's axis. The cylinder's fastening required the use of a small amount of Teflon film of mass PTFE = 26.8 mg. The thermocouples were adhered to the lateral face by means of a small amount of GE varnish, of negligible mass.

Measurement conditions

The cylinder's SAR was determined in both adiabatic and non-adiabatic conditions, in the first case with vacuum levels of 1.4 - 1.6·10-4 mbar, and in the second, at atmospheric pressure and with the temperature control deactivated. 7 pulses of each type were carried out, using alternating magnetic fields of frequency 108 kHz and amplitudes comprised between 0.4 and 1.8kA/m. In these conditions and considering a resistivity of 1.70·10-8 $\Omega$·m, the critical frequency is 2549 Hz, much lower than the working frequency, meaning that the SAR expression described above is valid. The working temperatures range is between 30 and 50ºC.

Results

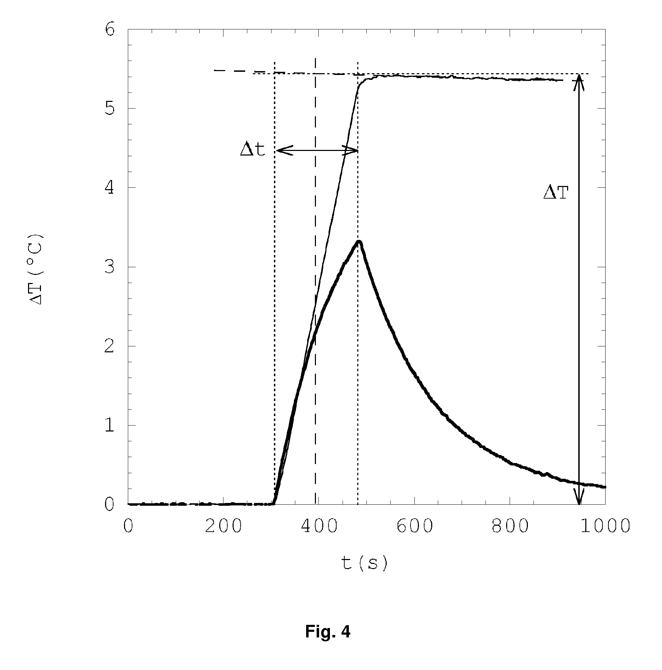

Figure 4 represents one example of an adiabatic pulse and another of a non-adiabatic pulse, carried out with field amplitudes of 1.29 and 1.37 kA/m, respectively, at a frequency of 108 kHz y with the alternating magnetic field activated during 175 s, from which it is possible to observe the heating and balancing or cooling behaviour, according to each case. For a better visual comparison, from each temperature the extrapolation of the initial linear trend has been subtracted in each case, meaning that what appears as shown is the $\Delta$T in respect of said initial trend. In the adiabatic case, the heating and balancing are linear, whereas in the non-adiabatic case, the heating and cooling trends are of an exponential type, due to the presence of significant heat losses to the environment.

The heating rate (ºC/s) for the adiabatic case has been calculated according to the incremental definition, represented in figure 4. For the non-adiabatic case, the initial heating slopes have been estimated for time intervals comprised between 10 and 100 s, set down in table 2. In all cases, the heating pace determined by slopes is lower than that calculated incrementally for the same field value. For the comparison, one of the time intervals resulting in a higher pace, of 60 s, was selected.

Table 2. Heating rate, dT/dt, of the copper cylinder, obtained from the slope of the non-adiabatic curve of 108 kHz and 1.37 kA/m, calculated considering different time intervals.

| $\Delta$t (s) | dT/dt (ºC/s) |
|---|---|
| 10 | 0.0143 |
| 20 | 0.0165 |
| 30 | 0.0211 |
| 40 | 0.0231 |
| 50 | 0.0247 |
| 60 | 0.0249 |
| 70 | 0.0250 |
| 80 | 0.0248 |
| 90 | 0.0242 |
| 100 | 0.0236 |

The C value required to calculate the SAR was obtained by using the Cp data of the copper (0.3935 J/g·K) and of the Teflon (1.172 J/g·K) for the range of working temperatures, resulting in a total value of 0.3838 J/K.

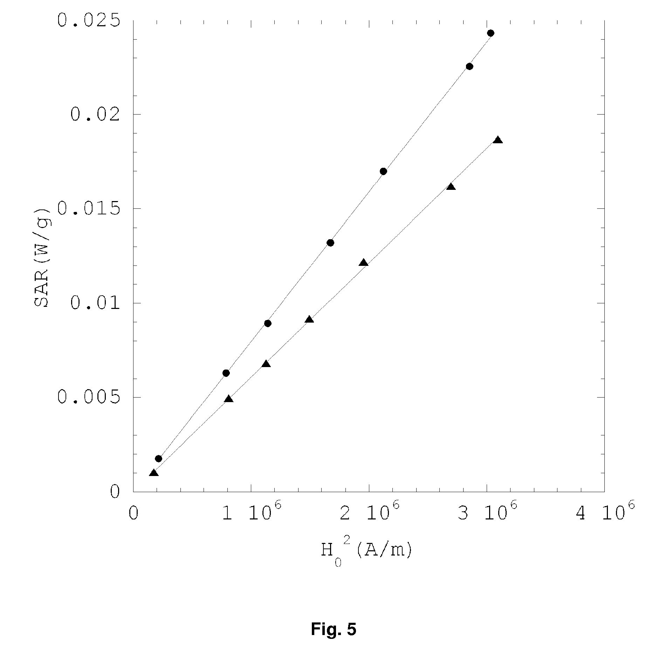

Figure 5 shows the variation of the adiabatic and non-adiabatic SAR with H02. It is linear in both cases, but with slopes of 0.00795 and 0.00607 W·m2/g·kA2, respectively, indicating that with the non-adiabatic method SAR values of 24% less than the adiabatic ones were obtained.

From the theoretical calculation of the dissipated power using $\sigma$ = 5.88·107$\Omega$2-1 -m-1 it is found that the SAR for a field of 1 kA/m is 0.00771 W/g, in other words, with the adiabatic determination SAR values just 3% higher than the theoretical ones have been obtained, whereas with the non-adiabatic one, values of 21% less have been obtained.

<u>Measurements of power dissipated in the form of heat of a commercial ferrofluid of magnetite particles.</u>

This example illustrates the viability of conducting SAR measurements of a ferrofluid in adiabatic conditions using sealed glass containers.

<u>Sample</u>

The sample is the commercial ferrofluid fluidMAG-UC from the company Chemicell GmbH (Berlin, Germany). It is an aqueous dispersion of magnetite nanoparticles with a hydrodynamic size of about 50 nm. The concentration of magnetite in the ferrofluid is 100 mg/ml and its density is 1.25 $g/cm^3$. Other technical specifications can be consulted from the company web page (http://www.chemicell.com).

In a sample holder (tube + lid) made of quartz (mquartz = 1.1561 g) an amount ferrofluid of mass mferrofluid = 0.3387 g was sealed. The quartz tube and lid were sealed using a commercial adhesive (madhesive = 0.045 g). The seal was first checked and then verified by the fact that following the measurements the system's mass had not varied. Teflon was also used to facilitate the sample's fastening to the nylon wires.

The sample was laid out in parallel to the coil's longitudinal axis, in such a way that the variable magnetic field was applied in the direction of the cylinder's axis. Despite the fact that the orientation of the ferrofluid is not relevant, the idea was to place the entire system under the action of a uniform field, in other words, in the central part of the coil. The thermocouples were adhered using a negligible amount of GE varnish to the side surface of the quartz tube and the latter was hung from the screen using nylon wires, using a Teflon strip of mass PTFE = 27.0 mg.

Measurement conditions

The SAR of the ferrofluid was determined in adiabatic conditions, with vacuum levels of 0.86 - 1.4·10-4 mbar. Pulses were carried out using alternating magnetic fields of frequency 108 kHz and amplitudes comprised between 0.4 and 1.7kA/m. The range of working temperatures is between 30 and 50ºC.

Results

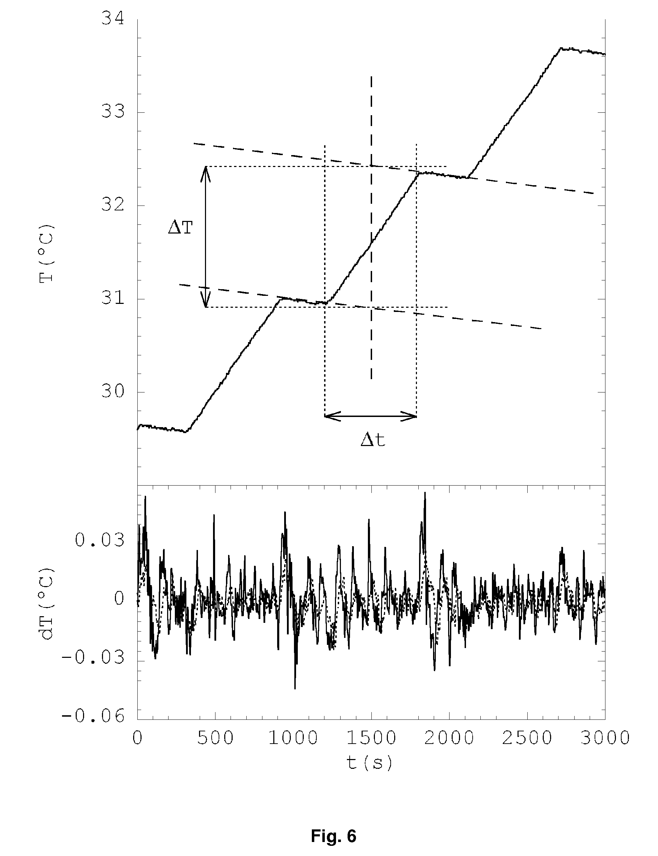

Figure 6 shows, on its top part, three consecutive pulses carried out at 1.1 kA/m and with the alternating magnetic field activated during approximately 600 s, displaying the incremental calculation of the heating rate (ºC/s). This figure reveals the possibility of carrying out measurements in equilibrium at different temperatures, irrespective of the surrounding temperature. The bottom part shows the temperature differences during the adiabatic control. Given that the PID constants are optimised for measuring this type of sample, the control remains within a range of $\pm$ 0.03ºC even during the field application and suppression moments.

To determine the SAR, 12 pulses have been considered at different field amplitude values. For the calculation of C, the specific heats of quartz, water, adhesive, magnetite and Teflon have been taken, which are 0.756, 4.18, 1.45, 0.937 and 1.172 J/g·K, respectively. Finally, the amount of dissipating material, in this case, the magnetite, was calculated based on the nominal values of concentration and density of the ferrofluid, resulting in 0.0271 g.

The obtained SAR values vary linearly with H02. The slope of this trend is of 0.179 W·m2/g·kA2, in other words, the SAR resulting from the adjustment for a field of 1.1 kA/m is 0.216 W/g. At the same time, the SAR value obtained solely from the average of 7 pulses at 1.1kA/m is 0.217 $\pm$0.009 W/g. This calculation is indicative of the low dispersion of the values obtained.

**Claims**

1. Adiabatic device for measuring the specific absorption rate (SAR) of a sample (1) subjected to an alternating magnetic field, comprising:

   (a) an adiabatic radiation screen (2), which houses the sample (1) to prevent it from exchanging heat with the medium, the screen (2) made of a material having high thermal conductivity and low electrical conductivity;
   (b) temperature sensor means;
   (c) at least one Dewar flask without polish for containing the adiabatic screen (2) and the sample (1).
   (d) an inductor element (11) for generating an alternating magnetic field inside, which contains at least one Dewar flask inside and having the appropriate characteristics for the magnetic field induced inside to be sufficiently homogeneous, the inductor element (11) together with the capacitor bench (12) constituting the load of the power stage;
   (e) an electronic power and excitation system (13) to supply and excite the inductor (11) - capacitor bench (12) assembly;
   (f) a vacuum device (8).

2. Adiabatic device for measuring the specific absorption rate (SAR) of a sample (1) subjected to an alternating magnetic field, according to claim 1, **characterized in that** the adiabatic screen (2) is made of a non-electrical conductor material.

3. Adiabatic device for measuring the specific absorption rate (SAR) of a sample (1) subjected to an alternating magnetic field, according to any of the previous claims, **characterized in that** the adiabatic screen (2) is made of a ceramic material.

4. Adiabatic device for measuring the specific absorption rate (SAR) of a sample (1) subjected to an alternating magnetic field, according to any of the previous claims, **characterized in that** the adiabatic screen (2) is made of alumina.

5. Adiabatic device for measuring the specific absorption coefficient (SAR) of a sample (1) subjected to an alternating magnetic field, according to any of the previous claims, **characterized in that** the adiabatic radiation screen (2) is provided with heating means.

6. Adiabatic device for measuring the specific absorption rate (SAR) of a sample (1) subjected to an alternating magnetic field, according to claim 4, **characterized in that** the heating means of the screen (2) consists of a resistive material deposited on the screen (2) by means of vapour phase deposition.

7. Adiabatic device for measuring the specific absorption rate (SAR) of a sample (1) subjected to an alternating magnetic field, according to claim 5, **characterized in that** the resistive material deposited to act as the heating means of the screen (2) is TiN.

8. Adiabatic device for measuring the specific absorption rate (SAR) of a sample (1) subjected to an alternating magnetic field, according to any of the previous claims, **characterized in that** there are at least three temperature sensor means, situated on the adiabatic screen, between the sample and the adiabatic screen and on the sample.

9. Adiabatic device for measuring the specific absorption rate (SAR) of a sample (1) subjected to an alternating magnetic field, according to any of the previous claims, **characterized in that** it is provided with two Dewar flasks; one internal Dewar flask (5) which contains the sample (1) and one external Dewar flask (6) both without polishing, thermally insulated, situated inside the inductor element (11) and containing the internal Dewar flask (5).

10. Adiabatic device for measuring the specific absorption rate (SAR) of a sample (1) subjected to an alternating magnetic field, according to claim 8, **characterized in that** the external Dewar flask (6) contains a sealed vacuum sleeve, and because its interior is accessible from the top part.

11. Adiabatic device for measuring the specific absorption rate (SAR) of a sample (1) subjected to an alternating magnetic field, according to claims 8 and 9, **characterized in that** the external Dewar flask (6) can be filled with a cooling liquid and allow temperatures below room temperature.

12. Adiabatic device for measuring the specific absorption rate (SAR) of a sample (1) subjected to an alternating magnetic field, according to any of claims 8-9, **characterized in that** the internal Dewar flask (5) is contained within the external Dewar flask (6) in a concentric fashion, with its vacuum chamber accessible by means of a tap that allows gas to be extracted or introduced inside said vacuum chamber.

13. Adiabatic device for measuring the specific absorption rate (SAR) of a sample (1) subjected to an alternating magnetic field, according to any of claims 8-10, **characterized in that** it includes support means for sustaining and holding the internal (5) and external (6) Dewar flasks and the inductor element (11) in a correct position.

14. Adiabatic device for measuring the specific absorption rate (SAR) of a sample (1) subjected to an alternating magnetic field, according to any of claims 8-11, **characterized in that** the inside of the internal Dewar flask (5) is closed by means of a lid (7) containing at least two connections outside, for creating the vacuum and measuring the pressure inside, and for introducing the electrical cabling.

15. Adiabatic device for measuring the specific absorption rate (SAR) of a sample (1) subjected to an alternating magnetic field, according to any of the previous claims, **characterized in that** it additionally includes registration, visualization and control means (15) for the relevant parameters, which comprise the following functions:

- reading and controlling the amplitude of the alternating magnetic field,

- obtaining the temperature values,
- PID control of the temperatures of the adiabatic screen,
- real-time measurement control and visualization.

**16.** Adiabatic device for measuring the specific absorption rate (SAR) of a sample (1) subjected to an alternating magnetic field, according to any of the previous claims, **characterized in that** it includes support means and cable guides (3), to hold the sample-screen assembly and lead to it the cabling of the temperature sensor means and heating means from the outside to the adiabatic screen (2).

**17.** Adiabatic device for measuring the specific absorption rate (SAR) of a sample (1) subjected to an alternating magnetic field, according to claim 14, **characterized in that** the support means and cable guide (3) consist of a plastic tube, preferably Bakelite.

**18.** Adiabatic device for measuring the specific absorption rate (SAR) of a sample (1) subjected to an alternating magnetic field, according to any of the previous claims, **characterized in that** the vacuum equipment (8) is connected to a pressure gauge (9).

**19.** Method for adiabatically measuring the specific absorption rate (SAR) of a sample subjected to an alternating magnetic field, which comprises the following operative phases:

(a) placing a sample of the material to be **characterized** inside an adiabatic device;
(b) subjecting the sample to a homogeneous alternating magnetic field created by an inductor element (11);
(c) monitoring the evolution of the sample's temperature according to the time in the presence of the magnetic field;
(d) determining the change in temperature ($\Delta T$) during the application time ($\Delta t$) of the alternating magnetic field;
(e) determining the specific absorption rate (SAR) as

$$SAR = \frac{1}{m} C \cdot \frac{\Delta T}{\Delta t}$$

**20.** Method for adiabatically measuring the specific absorption rate (SAR) of a sample subjected to an alternating magnetic field according to claim 17, **characterized in that** the operative phase (a) includes the stage of creating vacuum in an environment of the sample (1).

**21.** Method for adiabatically measuring the specific absorption rate (SAR) of a sample subjected to an alternating magnetic field, according to claim 17 or 18, **characterized in that** in the operative phase (a) the sample (1) of the material to be **characterized** is placed inside an adiabatic device according to any of claims 1-16.

**22.** Method for adiabatically measuring the specific absorption rate (SAR) of a sample subjected to an alternating magnetic field, according to any of claims 17-19, **characterized in that** the change in temperature ($\Delta T$) during the interval ($\Delta t$) of application of the alternating magnetic field is determined as the difference in temperature in the final and initial moments of field application.

**23.** Method for adiabatically measuring the specific absorption rate (SAR) of a sample subjected to an alternating magnetic field, according to any of claims 17-19, **characterized in that** the change in temperature ($\Delta T$) during the interval ($\Delta t$) of application of the alternating magnetic field is determined by extrapolating the behaviours of temperature over time before and after applying the field and calculating the $\Delta T$ increase as the difference between both extrapolations at the mid-point of the excitation time interval.

**24.** Method for adiabatically measuring the specific absorption rate (SAR) of a sample subjected to an alternating magnetic field, according to any of claims 17-21, **characterized in that** it additionally includes the operative phase of controlling and selecting the frequency and amplitude of the alternating magnetic field.

**25.** Method for indirectly determining the properties of a dissipating material if the dissipation mechanism is known and there is a theoretical expression of the SAR according to said properties. This method comprises the following operative phases:

(a) adiabatically determining the specific absorption rate (SAR) of a sample of the material;

(b) determining the value of the property of the material based on the theoretical expression of the SAR.

**26.** Method for determining the value of the property of the material, according to claim 23, **characterized in that** the operative phase (a) is carried out according to the adiabatic method defined in any of claims 17-22.

**Fig. 1**

**Fig. 2**

Fig. 3

**Fig. 4**

**Fig. 5**

**Fig. 6**

# INTERNATIONAL SEARCH REPORT

| | International application No. |
|---|---|
| | PCT/ ES 2008/070242 |

## A. CLASSIFICATION OF SUBJECT MATTER

see extra sheet

According to International Patent Classification (IPC) or to both national classification and IPC

## B. FIELDS SEARCHED

Minimum documentation searched (classification system followed by classification symbols)

G01K, G01N, G01R

Documentation searched other than minimum documentation to the extent that such documents are included in the fields searched

Electronic data base consulted during the international search (name of data base and, where practicable, search terms used)

INVENES,EPODOC, WPI, XPESP, NPL, INSPEC

## C. DOCUMENTS CONSIDERED TO BE RELEVANT

| Category* | Citation of document, with indication, where appropriate, of the relevant passages | Relevant to claim No. |
|---|---|---|
| X | US 5806979 A (GSCHNEIDNER et al.) 15.09.1998, column 4, line 60 - column 5, line 52; column 6, lines 44-56; figures 1-5. claims 6 and 7 | 1-26 |
| Y | WO 9960356 A1 (CONSIGLIO NAZIONALE RICERCHE ; SALVETTI GIUSEPPE ; FERRARI) 25.11.1999, page 1, line 5 - page 6, line 12; figures 1-2 and 5-7 | 1-26 |
| Y | SKUMIEL, A. Suitability of water based magnetic fluid with CoFe2O4 particles in hyperthermia. J. Magn. Mag. Mat. 307 (01.12.2006) pages 85-90, figure 2, ISSN 0304-8853NR. | 1-26 |

☒ Further documents are listed in the continuation of Box C.          ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | |
| | "&" document member of the same patent family |

| Date of the actual completion of the international search | Date of mailing of the international search report |
|---|---|
| 04 May 2009     (04.05.2009) | (11/05/2009) |
| Name and mailing address of the ISA/ O.E.P.M. Paseo de la Castellana, 75 28071 Madrid, España. Facsimile No.  34 91 3495304 | Authorized officer E. Pina Martínez Telephone No. +34 91 349 85 52 |

Form PCT/ISA/210 (second sheet) (July 2008)

## INTERNATIONAL SEARCH REPORT

| | International application No. |
|---|---|
| | PCT/ES 2008/070242 |

| C (continuation). | DOCUMENTS CONSIDERED TO BE   RELEVANT | |
|---|---|---|
| Category* | Citation of documents, with indication, where appropriate, of the relevant passages | Relevant to claim No. |
| A | WO 2004055538 A1 (EPCOS AG ; PATTER ANDREA ; LUCKE RALPH) 01.07.2004, BASE DE DATOS WPI in EPOQUE, abstract; figure 2. | 1-26 |
| A | US 3826972 A (DAY et al.) 30.07.1974, column 3, line 46 - column 4, line 10; figure 4. | 1-18 |

Form PCT/ISA/210 (continuation of second sheet) (July 2008)

## INTERNATIONAL SEARCH REPORT

Information on patent family members

International application No.

PCT/ ES 2008/070242

| Patent document cited in the search report | Publication date | Patent family member(s) | Publication date |
|---|---|---|---|
| US 5806979 A | 15.09.1998 | WO 9822788 A | 28.05.1998 |
| WO 9960356 A | 25.11.1999 | ITPI 980044<br>IT 1306122 B<br>IT P<br>IT 1306610 B<br>EP 1080350 A<br>EP 19990932695 | 18.08.1998<br>29.05.2001<br>19.04.2000<br>18.06.2001<br>07.03.2001<br>20.05.1999<br>20.05.1999 |
| WO 2004055538 A | 01.07.2004 | DE 10259321 A | 15.07.2004<br>15.07.2004<br>15.07.2004 |

Form PCT/ISA/210 (patent family annex) (July 2008)

28

## INTERNATIONAL SEARCH REPORT

International application No.

PCT/ ES 2008/070242

CLASSIFICATION OF SUBJECT MATTER

*G01K 17/00* (2006.01)
*G01N 25/20* (2006.01)

# EP 2 237 007 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Gilchrist et al.** Selective inductive heating of lymph nodes. *Ann. Surg.,* 1957, vol. 146, 596-606
- **Hiergeist et al.** *J. Magn. Magn. Mat.,* 1990, vol. 201, 420-422
- **Hilger et al.** *Acad. Radiol.,* 2002, vol. 9, 198-202
- **Ma et al.** *J. Magn. Magn. Mat.,* 2004, vol. 268, 33-39
- **Fortin et al.** *J. Am. Chem. Soc.,* 2007, vol. 129, 2628-2635
- **M.T. Thompson.** *IEEE Transactions on Magnetics,* 1998, vol. 34, 3755
- **P. Olafsson et al.** *Journal of Materials Science,* 1997, vol. 32, 4383
- Aluminium and Aluminium Alloys. ASM specialty Handbook. 1993
- **M. Zahn.** *IEEE Transactions on Magnetics,* 1997, vol. 33, 1021